# EUROPEAN PATENT APPLICATION

(11) **EP 1 270 100 A2**
(43) Date of publication of application: **02.01.2003**
(21) Application number: 02291446.9
(22) Date of filing: 11.06.2002
(51) Int. Cl.: B21C 37/08

(54) **Electro-resistance-welded tube manufacturing apparatus and method**

(30) Priority: 13.06.2001 JP 2001178932
(71) Applicant: MITSUBISHI SHINDOH CO., LTD., Chuo-ku, Tokyo (JP)
(72) Inventor: Kazama, Takashi, Mitsubishi Shindoh Co. Ltd., Aizuwakamatsu-shi, Fukushima-ken (JP); Ozaki, Kazunori, Mitsubishi Shindoh Co. Ltd., Aizuwakamatsu-shi, Fukushima-ken (JP)
(74) Representative: Ilgart, Jean-Christophe

(57) **Abstract**

A concave curved surface 28 having an arc configuration with the radius R as seen in a vertical cross sectional view is formed over an entire side surface of each of squeeze rolls 8. Below the concave curved surface 28 is provided a lower side flange portion 29; while above the concave curved surface 28 is provided an upper side flange portion 30. A virtual line that includes the center point of the radius R is provided parallel to a rotation shaft 22 of the squeeze roll 8 and facing the concave curved surface 28. With the distance from the virtual line to the lower side flange portion 29 taken as "a" and the distance to the upper side flange portion taken as "b", the relationship a < b is established.

## Description

### BACKGROUND OF THE INVENTION

### Field of the Invention

The present invention relates to an electro-resistance-welded tube manufacturing apparatus and manufacturing method for curling a strip into a tube shape and heat welding both edges thereof using squeeze rolls.

### Description of the Related Art

Conventionally, electro-resistance-welded tubes that are used for hot water supply tubes and cold water supply tubes or for heat exchange tubes in air conditioners or refrigerators or the like are formed into a tube shape by curling a strip into a rounded shape as it is being fed along. The strip in this case being a belt of metal formed from copper or brass or the like. A tube is then formed by continuously welding both edges of the tube shaped material as it is fed along using a welding means provided by a high frequency dielectric welder or a high frequency resistance welder or the like.

During welding, the two edges of a strip that has been curled into a C shape are heated by a high frequency induction welder or the like that includes, for example, a work coil such as an induction heating coil and a ferrite core so that joule heat is generated that is concentrated in the two edges. As the strip, which has been curled into a C shape, passes between a pair of squeeze rolls, the two heated edges are pressed and butt welded together so as to form a tube shape.

In Japanese Patent Application Laid-Open (JP-A) No. 56-26684, for example, a concave curved surface formed around the entire circumference of a side surface of each squeeze roll is formed with a substantially semicircular vertical cross section such that the top and bottom ends thereof are the same distance from a rotation shaft of the squeeze roll. Therefore, if a pair of squeeze rolls are positioned facing each other with a slight gap in between, the two concave curved surfaces that weld the strip while transporting it forward together are positioned so as to form a substantially circular shape. By passing the strip that has been curled into a C shape between the concave curved surfaces of the pair of squeeze rolls, the strip is placed in contact with the concave curved surfaces and is further curved around. As a result, the two edges are heat welded so as to form an electro-resistance-welded tube.

When manufacturing an electro-resistance-welded tube by heat welding a strip that has been curled into a C shape using squeeze rolls, in order to suppress distortion in the electro-resistance-welded tube and alleviate the load during the subsequent shaping processing, it is necessary for the electro-resistance-welded tube to be formed with the highest possible degree of circularity. Therefore, the concave curved surface of each squeeze roll needs to be worked into a substantially semicircular shape as seen in a vertical cross sectional view that has a diameter R that is close to the outer diameter of the electro-resistance-welded tube. Moreover, a substantially circular cross sectional configuration is formed by the two facing concave curved surfaces when the pair of squeeze rolls are positioned facing each other.

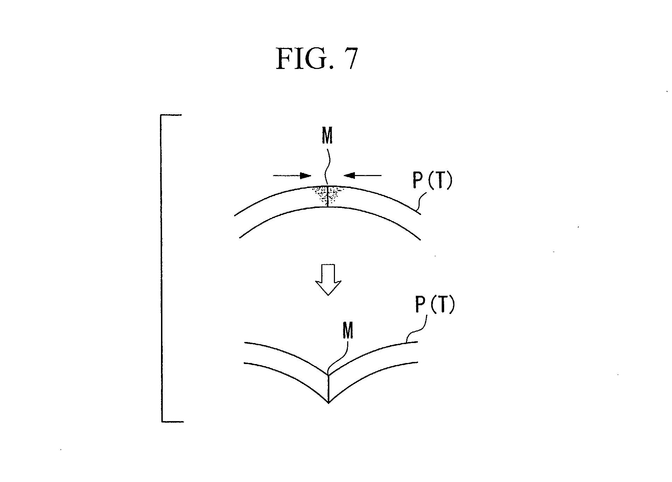

However, when the two edges of a strip are heat welded, while the two edges of the strip are heated and fused together by a work coil from the top end to the bottom end in the direction of the plate thickness, due to the above described configuration of the squeeze rolls, as is shown in Fig. 7, the two edges T1 and T2 of the strip T are pressed together so as to come into surface contact in the thickness direction thereof. In this case, the heating of the bottom end of the two edge portions is blocked by the top end that becomes welded first. Therefore, the heat welding of this bottom end portion cannot be performed satisfactorily causing the problem of the weld strength being insufficient.

Furthermore, because the top end and bottom end of the concave curved surfaces are the same distance from the rotation shaft of the squeeze roll, as a result of the two edges T1 and T2 of the plate member that is pressed from both sides being in surface contact and being heated so as to be fused together, a weld portion M ends up dropping into the interior of the electro-resistance-welded tube P. Therefore, the problem arises of the shape of the welded electro-resistance-welded tube P becoming distorted thereby creating difficulties in the subsequent shaping processing, or of the shaping processing not being performed satisfactorily causing the electro-resistance-welded tube to be defective.

The present invention was conceived in view of the above circumstances and it is an object thereof to provide an electro-resistance-welded tube manufacturing apparatus and manufacturing method that enable distortion and deformation of the tube during welding to be suppressed.

### SUMMARY OF THE INVENTION

The manufacturing apparatus for an electro-resistance-welded tube of the present invention is a manufacturing apparatus for an electro-resistance-welded tube formed by curling a moving strip into a tube shape, passing the strip between concave curved surfaces formed in side surfaces of a pair of squeeze rolls and heat welding two edges of the strip, wherein a distance from a rotation shaft of each squeeze roll to an upper edge of each concave curved surface is shorter than a distance from the rotation shaft to a lower edge of each concave curved surface.

As a result of the C shaped strip being in contact with the concave curved surfaces of the pair of squeeze rolls arranged facing each other as it is transported between the concave curved surfaces, the strip is curved by the shape of the concave curved surfaces so as to have an even smaller diameter. Because the portions adjacent to the two edges of the strip protrude outwards from the gap between the upper edges (i.e., the upper side flange portions) of the two concave curved surfaces, the curvature of the portions adjacent to the two edges is made less due to their rigidity, and the strip is heat welded with the two edges protruding slightly upward and butted together. As a result, the two edges of the strip are gradually welded starting from the lower edge side in the thickness direction of the strip and moving towards the upper edge side. Consequently, the two edges are welded without any sinking down of the weld portion and with the strength of the weld portion ensured. As a result, a high quality electro-resistance-welded tube is formed. In this case, the gap between the lower edges of the curved surfaces of the pair of squeeze rolls is set to be smaller than the gap between the upper edges thereof. This enables the electro-resistance-welded tube to be prevented from sinking in portions into this gap and being deformed during welding, and enables spatter to be scattered peripherally in the gap between the upper edges.

It is also possible for a vertical axis to be formed longer than a horizontal axis in a vertical cross sectional view of the electro-resistance-welded tube that is welded when the two edges of the strip protrude into a gap formed between the upper edges of the concave curved surfaces.

By forming the welded electro-resistance-welded tube that is welded between the concave curved surfaces of the pair of squeeze rolls with a substantially egg shape or teardrop shape such that the weld portion of the two edges protrudes from the gap, the welding can be performed while gradually heating from the bottom edge moving to the top edge in the thickness direction of the two edges that are heated from above, and the two edges can be heat fused across the entire thickness direction thereof, enabling a high weld strength with no sinking to be obtained.

It is also possible for a tapered surface that slopes towards the rotation shaft of each squeeze roll via an upper side flange portion having a predetermined thickness to be formed at the upper edge side of the concave curved surface of each squeeze roll.

By forming an upper side flange portion at the upper edge side of the concave curved surface of each squeeze roll, failures can be largely prevented, the strength of the squeeze rolls can be increased and their durability improved. Moreover, by forming the tapered surface at the top of the squeeze roll, when spatter scatters from the exposed weld portion of the two edges of the electro-resistance-welded tube out from the gap between the upper edges of the concave curved surfaces, the spatter scatters along the tapered surface and can be kept away from the surface of the electro-resistance-welded tube. As a result, spatter can be prevented from adhering to the surface of the electro-resistance-welded tube.

The method for manufacturing an electro-resistance-welded tube of the present invention is a method for manufacturing an electro-resistance-welded tube formed by curling a moving strip into a tube shape, passing the strip between concave curved surfaces formed in side surfaces of a pair of squeeze rolls and heat welding two edges of the strip, wherein the two edges of the strip passing between the squeeze rolls are welded starting from the lower edge side in a thickness direction of the strip and moving to the top edge side.

As a result of the C shaped strip being in contact with the concave curved surfaces of the pair of squeeze rolls as it is transported between the concave curved surfaces, the strip is curved along the shape of the concave curved surfaces so as to have an even smaller diameter. Because the portions adjacent to the two edges of the strip protrude from the gap between the upper edges, in the strip the two edges protrude slightly upward and towards the outside of the circle formed by the concave curved surfaces and are butted together and heat welded. As a result, the two edges of the strip are gradually welded starting from the lower edge side in the thickness direction of the strip and moving towards the upper edge side. Consequently, the two edges are welded securely enabling an electro-resistance-welded tube to be formed.

It is also possible for the two edges of the electro-resistance-welded tube to be welded when portions adjacent to the two edges of the strip protrude outwards (i.e. of the gap between the concave curved surfaces) as seen in a vertical cross sectional view, and for a vertical axis to be formed that is longer than a horizontal axis as seen in a vertical cross sectional view.

Because of the rigidity of the two edges of the strip, the two edges protrude outwards from the gap formed between the upper edges of the two curved surfaces and the curvature of the portions adjacent to the two edges is less. During welding of the two edges, the two edges are placed in contact and welded from the lower edge side in the thickness direction thereof. As a result, even if the two edges are heat fused from the top edge side, a high quality electro-resistance-welded tube can be manufactured with no deficiencies in the weld strength and with no sinking of the weld portion.

### BRIEF DESCRIPTION OF THE DRAWINGS

Fig. 1 is a schematic structural diagram showing a production line for an electro-resistance-welded tube manufacturing apparatus according to an embodiment of the present invention.
Fig. 2 is a plan view of the main portions showing a state in which an electro-resistance-welded tube is being welded by squeeze rolls.
Fig. 3 is a vertical cross sectional view of the main portions of a squeeze roll.
Fig. 4 is a view showing the mounting adjustment of a pair of squeeze rolls.
Fig. 5 is a view showing a state in which an electro-resistance-welded tube is being welded by a pair of squeeze rolls.
Fig. 6A is a view showing welding states of the two edges of an electro-resistance-welded tube according to an embodiment of the present invention, while Fig. 6B is a view showing undesirable welding states of the two edges of an electro-resistance-welded tube.
Fig. 7 is a view showing welding states of the two edges of a conventional electro-resistance-welded tube.

### DESCRIPTION OF THE PREFERRED EMBODIMENTS

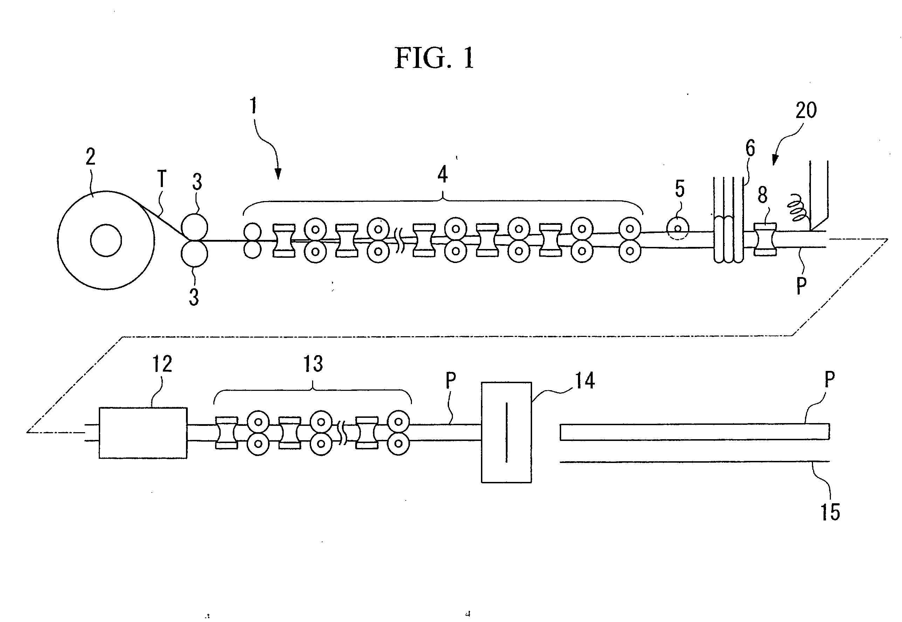

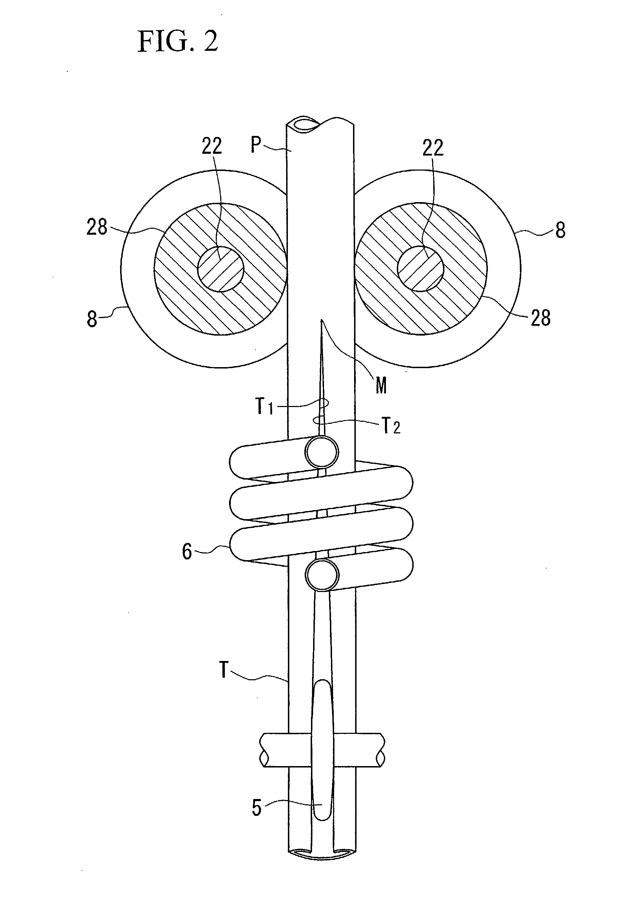

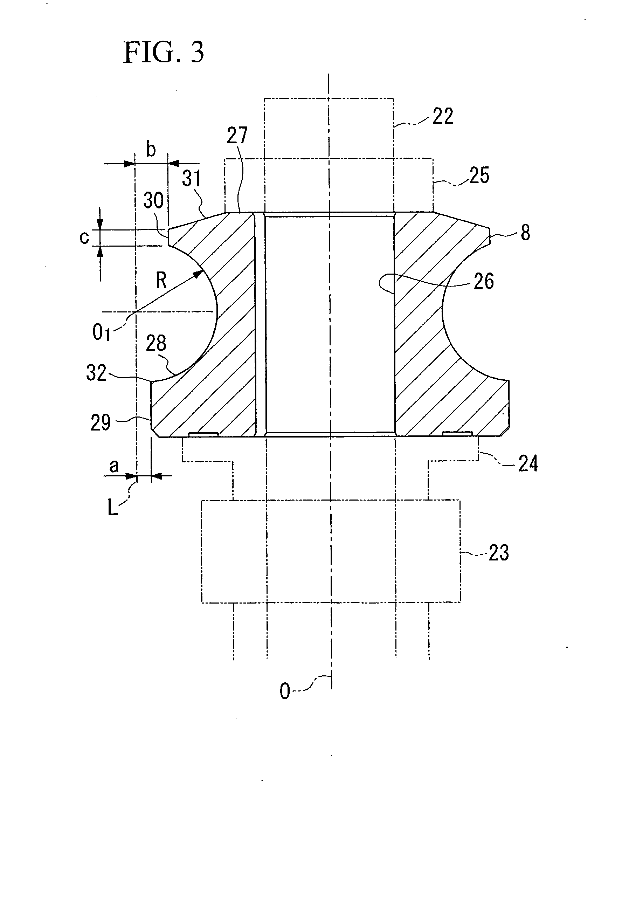

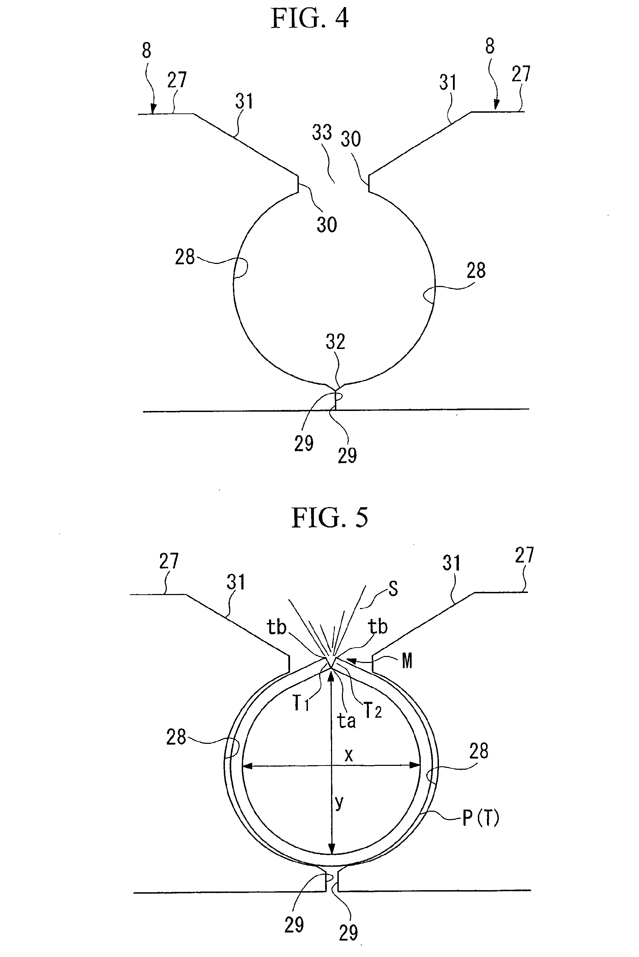

The electro-resistance-welded tube manufacturing apparatus according to an embodiment of the present invention will now be described with reference to Figs. 1 through 6. Fig. 1 is a schematic structural diagram showing a production line for an electro-resistance-welded tube manufacturing apparatus; Fig. 2 is a schematic plan view showing a pair of squeeze rolls and an electro-resistance-welded tube in a welding section of the manufacturing apparatus shown in Fig. 1; Fig. 3 is a central vertical cross sectional view of a squeeze roll; Fig. 4 is a partial central vertical cross sectional view in which a pair of squeeze rolls are placed in an adjustment state in order to weld a strip; and Fig. 5 is a partial central vertical cross sectional view showing a pair of squeeze rolls during the welding of an electro-resistance-welded tube.

The electro-resistance-welded tube according to the present embodiment is a simple metal tube having a smooth internal surface and is used as a hot water supply tube, a cold water supply tube, or the like, however, the present invention may also be applied to any metal tube such as a metal tube that has irregular structures formed on the external surface of the tube or that has grooves formed on the internal surface of the tube and is used in refrigerators or air-conditioning equipment. Moreover, the material from which the electro-resistance-welded tube according to the present embodiment is formed is brass, however, the present invention may also be applied to copper tubes, aluminum tubes, or metal tubes formed from some other material.

In the manufacturing apparatus 1 for manufacturing an electro-resistance-welded tube (referred to below simply as a "tube") shown in Fig. 1, a strip T in the form of a continuous belt having a constant width that is formed from a belt of metal such as brass is continuously fed out from an uncoiler 2. The fed out strip T passes through a pair of pressing rolls 3 and then through a plurality of pairs of forming rolls 4 arranged in a row. The strip T is thus gradually rounded into the shape of a C. Once the amount of the gap between the two edges of the strip T that are to be butted together by a rolling separator 5 is made constant, the strip T is passed through a work coil of an induction heating section, for example, through an induction heating coil 6.

The induction heating coil 6 heats the strip T that has been rounded into a C shape and generates joule heat concentrated in both edges. When the strip T passes through a pair of squeeze rolls 8 and 8, as is shown in Fig. 2, the two heated edges T1 and T2 are pressed and butt welded together to form a weld portion M. On the internal and external surfaces of the tube P formed by the welding of the strip T, internal and external surface beads are formed from fused material extruded from the welded portion. These are removed by cutting apparatuses.

After the tube P has passed through a cooling tank 12 and been forcibly cooled, it is shrunk to a predetermined external diameter by being passed through a plurality of pairs of sizing rolls 13 arranged in a row. After the tube P has been shaped by a shaping roll (not shown) it is cut into predetermined lengths, for example, 4 to 6 meters by a cutting apparatus 14 and the cut tubes are then stacked on a stock table 15.

A detailed description will now be given using Figs. 3 through 5 of a squeeze roll unit 20 provided with squeeze rolls 8 and 8 according to the present embodiment in the electro-resistance-welded tube manufacturing apparatus 1 having the above described schematic structure.

As is shown in Figs. 1 and 2, in the squeeze roll unit 20, a pair of squeeze rolls 8 and 8 are provided sandwiching the strip T and aligned in a direction substantially orthogonal to the direction in which the strip T is transported.

Each squeeze roll 8 has the vertical cross sectional configuration shown in Fig. 3. Each squeeze roll 8 is fixed in place by a rotation shaft 22 provided in the rotation center of the squeezer roll. The rotation shaft 22 is rotatably supported via bearings by a holding mechanism (not shown). The squeeze roll 8 and the rotation shaft 22 can be made to rotate integrally by, for example, fitting a key together with a key groove.

By selecting a spacer 24 of a predetermined thickness as appropriate to insert between an upper wide diameter portion 34a formed integrally with the rotation shaft 22 and the squeeze roll 8, it is possible to set the height of the squeeze roll 8 to an appropriate height. This spacer 24 is selected and fitted when the heights of the pair of squeeze rolls 8 and 8 are to be made the same. By tightening a nut 25 on the top of each squeeze roll 8, the squeeze roll 8 is supported on the rotation shaft 22 between the spacer 24 and the nut 25.

Each squeeze roll 8 is formed substantially in a disk shape and has a center hole 26 into which the rotation shaft 22 is fitted penetrating the central portion of the squeeze roll 8 in the vertical direction. Around the entire circumference of the side surface in the thickness direction of the squeeze roll 8, a concave curved surface 28 having a substantially arc shaped configuration whose vertical cross section has the radius R is formed around the entire periphery centering on the rotation shaft 22. The surface of the concave curved surface 28 may be, for example, a mirror finished surface and a lubricant such as a water soluble oil may be coated on this surface. This allows the C shaped strip T to be curled more easily into a tube shape.

A lower side flange portion 29 whose outer surface is formed substantially in a circular cylinder configuration is formed below the bottom end of the concave curved surface 28. An upper side flange portion 30 whose outer surface is formed substantially in a circular cylinder configuration having a predetermined thickness c is formed above the top end of the concave curved surface 28. The thickness c may be set within the range of 1 to 2 mm, for example, which ensures sufficient mechanical strength. If c is less than 1 mm, the mechanical strength of this portion is too small making it probable that a failure will occur. If c is greater than 2 mm, the concern exists that spatter that is scattered from the weld portion M in the electro-resistance-welded tube P will hit the upper side flange portion 30 and fall onto the top of the electro-resistance-welded tube P and then become adhered thereto and harden.

A substantially truncated cone shaped tapered surface 31 is formed sloping upwards from the top end of the upper side flange portion 30 towards a top surface 27 in which the center hole 26 is formed. With the center axis of the rotation shaft 22, namely, the center of rotation of the squeeze roll 8 taken as O, the angle of inclination of the tapered surface 31 may be set to an appropriate acute angle.

The bottom end of the concave curved surface 28, which is the portion where the concave curved surface 28 intersects with the lower side flange portion 29 is a curved portion 32 that is curved in an arc shape having the radius R.

A virtual line L is provided substantially parallel to the center axis O of the rotation shaft 22 opposite the concave curved surface 28 of each squeeze roll 8, and a center point O 1 of the radius R of the concave curved surface 22 is taken as being on the virtual line L. If the distance from the virtual line L to the lower side flange portion 29 is taken as a, and the distance from the virtual line L to the upper side flange portion 30 is taken as b, then the relationship a < b exists. Namely, the distance from the upper side flange portion 30 to the rotation shaft 22 is set shorter than the distance from the lower side flange portion 29 to the rotation shaft 22.

A state in which a pair of squeeze rolls 8 and 8 having the above described structure are mounted on a production line for an electro-resistance-welded tube P is shown in Fig. 4. The squeeze rolls 8 and 8 shown in Fig. 4 are in a state of adjustment prior to the transporting of the strip T and the lower side flange portions 29 and 29 of each squeeze roll 8 are butted together in the drawing. In this state, a small gap 33 is provided between the upper side flange portions 30 and 30 that includes the area between the upper ends of the concave curved surfaces 28 and 28. The gap between the pair of squeeze rolls 8 and 8 can be adjusted as is appropriate by an adjustment means (not shown) and may be adjusted in accordance with the outer diameter and thickness of the electro-resistance-welded tube P. Moreover, even when the gap between the pair of squeeze rolls 8 and 8 is set appropriately in accordance with the outer diameter and thickness of the electro-resistance-welded tube P, the gap is set such that the weld portion M in the electro-resistance-welded tube P always protrudes from the concave curved surface 28 into the gap 33 during welding.

The squeeze rolls 8 according to the present embodiment have the above described structure and prior to the manufacturing of the electro-resistance-welded tube P the positions of the squeeze rolls 8 and 8 are adjusted in the squeeze roll unit 20. Firstly, before the strip T is transported, as is shown in Fig. 4, the lower side flange portions 29 and 29 of the pair of squeeze rolls 8 and 8 are butted together and, in this state, the thickness of the spacers 24 are adjusted such that the heights of each concave curved surface 28 and 28 are the same. The abutting portions of the lower side flange portions 29 and 29 are also adjusted such that they are positioned at a join position that is also the center of the strip T.

Next, the squeeze rolls 8 and 8 are opened wide, the strip T is passed between the concave curved surfaces 28 and 28 and the distance between the squeeze rolls 8 and 8 is appropriately set. For example, as is shown in Fig. 5, the distance may be set such that the lower side flange portions 29 and 29 are a slight distance apart and the centerline of the radius R is at an identical position between the two concave curved surfaces 28 and 28. In this state, the distance between the upper side flange portions 30 and 30 is 2b.

In this state, the manufacturing of the electro-resistance-welded tube P is performed. Namely, in the manufacturing apparatus 1 for an electro-resistance-welded tube P shown in Fig. 1, a strip T formed from brass, for example, is continuously fed out from an uncoiler 2. The fed out strip T passes through forming rolls 4 and is gradually curled into the shape of a C. The strip T is then passed through the induction heating coil 6 of an induction heating section. When the strip T that has been heated by the induction heating coil 6 passes through the pair of squeeze rolls 8 and 8, the two heated edges T1 and T2 are pressed and butt welded together.

During welding, as is shown in Figs. 2 and 5, when the C shaped strip T moves between the pair of concave curved surfaces 28 and 28 of the pair of squeeze rolls 8 and 8 that together substantially form a circle, it is guided by the concave curved surfaces 28 and 28 so as to be curved beyond the C shape and making the radius of curvature thereof even smaller. The two edges thereof T1 and T2 are positioned away from the top ends of the concave curved surfaces 28 and protrude into the gap 33 so as to butt together. Due to the rigidity of the strip T, the areas adjacent to the two edges T1 and T2 located inside the gap 33 away from the concave curved surfaces 28 have a larger radius of curvature than the portions located inside the concave curved surfaces 28 and protrude substantially with a mountain peak shaped cross section.

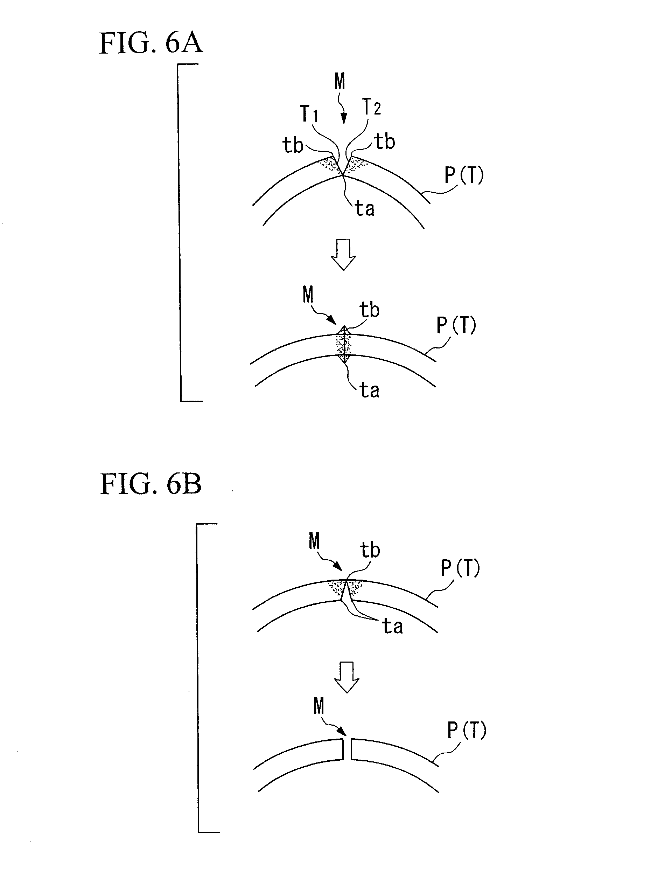

As a result, as seen in a vertical cross sectional view, the strip T has a substantially egg shape or teardrop shape and, as is seen in Fig. 6A, when the top edges tb and tb in the thickness direction of the two edges T1 and T2 of the weld portion M are opened up away from each other, the bottom edges ta and ta can be fused and welded together. The two edges T1 and T2 are then gradually pushed together so that the top edges tb and tb are welded. In particular, because the two edges T1 and T2 that are heated by the work coil 6 are heated from the top side thereof, the top edge tb has the higher heating temperature and fuses more easily. Therefore, if the abutment and welding are done gradually staring from the bottom edges ta and ta that have a comparatively low heating temperature and moving to the top edges tb and tb, the two edges T1 and T2 are reliably heated across their entire thickness direction as the heating fusion progresses so that there is no fear of the two edges T1 and T2 separating.

Moreover, the electro-resistance-welded tube P that is formed in this case is formed with a slightly larger radius of curvature in the gap 33 between the upper side flange portions 30 and 30 than in the portions positioned inside the concave curved surface 28 so that there is no sinking towards the interior. Therefore, the electro-resistance-welded tube P has a substantially egg shape, as seen in a vertical cross sectional view, with the maximum length y in the vertical direction (i.e., the vertical axis) including the weld portion M being longer than the maximum length x in the horizontal direction (i.e., the horizontal axis). As a result, the subsequent shaping processing is simplified.

In contrast to this, as shown in Fig. 6B, if the top edges tb and tb of the two edges T1 and T2 of the strip T are placed in contact first, the bottom edges ta and ta have difficulty in becoming heated as they are blocked by the top edges tb and tb. Therefore, problems relating to insufficient weld strength arise such as the fusion being insufficient leading to the welding being insufficient, and also because the top edges tb and tb are highly fused, they tend to separate easily and the two edges T1 and T2 tend to separate from each other. Moreover, as is shown in the aforementioned Fig. 7, when the two edges T1 and T2 of the strip T are placed in surface contact at the same time, the weld portion sinks causing distortion, and it is difficult for heat to be transmitted to the bottom edge ta creating the problem of the weld strength being too weak.

Furthermore, when the C shaped strip T that has been inserted between the squeeze rolls 8 and 8 is pressed and the two edges T1 and T2 thereof are heat welded, spatter is generated in the weld portion M. In particular, more spatter is scattered when the strip T is made from brass than when another material is used. In this case, as is shown in Fig. 5, the spatter s is scattered with the weld portion M of the two edges T1 and T2 protruding into the gap 33 between the upper side flange portions 30 and 30. In particular, by welding starting from the bottom edge ta of the weld portion M and moving towards the top edge tb, the majority of the spatter s is scattered to the outside. Because the spatter s scatters peripherally along the tapered surfaces 31 and 31 of the squeeze rolls 8 and 8, and because the thickness c of the upper side flange portion 30 is limited to a range of 1 to 2 mm, the spatter hits the upper side flange portions 30 and 30, bounces back, and can thus be largely prevented from adhering to the electro-resistance-welded tube P.

Because the gap between the lower side flange portions 29 and 29 is smaller than the gap 33, prevention of the bottom portion of the tube P from sinking and deforming is ensured.

The two edges T1 and T2 of the strip T are thus reliably welded and a high quality electro-resistance-welded tube P can be manufactured.

As has been described above, according to the present embodiment, there are no problems such as the two edges T1 and T2 of the weld portion M in the electro-resistance-welded tube P heat welded by the squeeze rolls 8 and 8 separating after the welding or the weld portion M sinking into the tube P. Sufficient weld strength can thus be ensured and welding of a high degree of work precision can be performed. Subsequent shaping processing is also simplified. Moreover, because the welding is done with the two edges T1 and T2 of the weld portion M protruding into the gap 33, spatter is guided by the tapered surfaces 31 and 31 and the like and is scattered peripherally. As a result, it can be restrained from adhering to the electro-resistance-welded tube P, thereby improving the weld quality and enabling a high quality electro-resistance-welded tube P to be manufactured.

Furthermore, because the gap between the lower side flange portions 29 and 29 is smaller than the gap 33 between the upper side flange portions 30 and 30, the bottom portion of the electro-resistance-welded tube P can be prevented during welding from sinking into the gap between the lower side flange portions 29 and 29 and becoming deformed.

In the manufacturing apparatus for an electro-resistance-welded tube according to the present embodiment, because the distance from the rotation shaft of a squeeze roll to the top edge of a concave curved surface is less than the distance to the bottom edge of the concave curved surface, the area of the strip adjacent to the two edges thereof protrude outwards from the gap between the top edges of the two concave curved surfaces. Therefore, the two edges are gradually welded starting from the bottom edge side in the thickness direction thereof and moving to the top edge side. This enables the two edges to be reliably heat fused and welded from the bottom edge thereof moving towards the top edge thereof, and enables a high quality electro-resistance-welded tube to be manufactured having a high weld strength with no sinking of the weld portion. In addition, spatter that is generated in the weld portion can be reliably made to scatter towards the outside.

Moreover, in an electro-resistance-welded tube that is welded with the two edges of the strip protruding into the gap formed between the top edges of the concave curved surfaces, because the vertical axis is longer than the horizontal axis as seen in a vertical cross sectional view, the welded electro-resistance-welded tube is formed substantially in an egg shape or teardrop shape with the weld portion of the two edges protruding from the gap. Consequently, the heat fusing is performed starting from the bottom end in the thickness direction of the two edges and moving to the top end thereof and the weld strength is high with no sinking occurring.

Because a tapered surface that slopes towards the rotation shaft of each squeeze roll via the upper side flange portion having a predetermined thickness is formed at the top edge side of the concave curved surface of each squeeze roll, failure is largely prevented at the upper side flange portion and the strength of the squeeze roll is increased. In addition, by forming the tapered surface at the top of the squeeze roll, when spatter scatters from the weld portion the spatter is distributed along the tapered surface and can be kept away from the surface of the electro-resistance-welded tube. As a result, spatter can be prevented from adhering to the surface of the electro-resistance-welded tube.

In the manufacturing method for an electro-resistance-welded tube according to the present invention, because the two edges of a strip that are passing through squeeze rolls are welded starting from the top edge in the thickness direction of the strip, the two edges are gradually heat fused and welded starting from the bottom edge side moving to the top edge side. This enables a high quality electro-resistance-welded tube to be manufactured having a high weld strength with no sinking of the weld portion. In addition, spatter that is generated in the weld portion can be reliably made to scatter towards the outside.

Moreover, because the two edges of a strip are welded with the portion of the strip adjacent to the two edges protruding outwards as seen in a vertical cross sectional view, and the vertical axis is longer than the horizontal axis as seen in a vertical cross sectional view, during welding the two edges are welded from the bottom edge thereof moving towards the top edge, enabling a high quality electro-resistance-welded tube to be manufactured with no deficiency in the weld strength and with no sinking of the weld portion.

## Claims

1. A manufacturing apparatus for an electro-resistance-welded tube formed by curling a moving strip into a tube shape, passing the strip between concave curved surfaces formed in side surfaces of a pair of squeeze rolls and heat welding two edges of the strip, wherein
a distance from a rotation shaft of each squeeze roll to an upper edge of each concave curved surface is shorter than a distance from the rotation shaft to a lower edge of each concave curved surface.

2. A manufacturing apparatus according to claim 1, wherein in a vertical cross sectional view of the electro-resistance-welded tube that is welded when the two edges of the strip protrude into a gap formed between the upper edges of the concave curved surfaces, a vertical axis is formed longer than a horizontal axis.

3. A manufacturing apparatus according to claim 1, wherein a tapered surface that slopes towards the rotation shaft of each squeeze roll via an upper side flange portion having a predetermined thickness is formed at the upper edge side of the concave curved surface of each squeeze roll.

4. A method for manufacturing an electro-resistance-welded tube, comprising curling a moving strip into a tube shape, passing the strip between concave curved surfaces formed in side surfaces of a pair of squeeze rolls, and heat welding two edges of the strip, wherein
the two edges of the strip passing between the squeeze rolls are welded starting from the lower edge side in a thickness direction of the strip and moving to the top edge side.

5. A method for manufacturing an electro-resistance-welded tube according to claim 4, wherein the two edges of the electro-resistance-welded tube are welded when portions adjacent to the two edges of the strip protrude outwards as seen in a vertical cross sectional view, and a vertical axis is formed that is longer than a horizontal axis as seen in a vertical cross sectional view.
